# EUROPÄISCHE PATENTSCHRIFT

(11) **EP 1 230 062 B1**
(45) Veröffentlichungstag und Bekanntmachung des Hinweises auf die Patenterteilung: **17.05.2006**
(21) Anmeldenummer: 00987148.4
(22) Anmeldetag: 17.11.2000
(51) Int. Cl.: B23K 20/12

(54) **VERFAHREN UND VORRICHTUNG ZUM VERBINDEN VON WENIGSTENS ZWEI ANEINANDERLIEGENDEN WERKSTÜCKEN NACH DER METHODE DES REIBSCHWEISSENS**
METHOD AND DEVICE FOR LINKING AT LEAST TWO ADJOINING WORK PIECES BY FRICTION WELDING
PROCEDE ET DISPOSITIF D'ASSEMBLAGE D'AU MOINS DEUX PIECES ADJACENTES SELON LE PROCEDE DE SOUDURE PAR FRICTION

(30) Priorität: 18.11.1999 DE 19955737
(43) Veröffentlichungstag der Anmeldung: 14.08.2002
(73) Patentinhaber: GKSS-Forschungszentrum Geesthacht GmbH, 21502 Geesthacht (DE)
(72) Erfinder: SCHILLING, Christoph, 21483 Lütau (DE); DOS SANTOS, Jorge, D-21395 Avendorf (DE)
(74) Vertreter: UEXKÜLL & STOLBERG
(86) Internationale Anmeldenummer: PCT/DE2000/004054
(87) Internationale Veröffentlichungsnummer: WO 2001/036144

(56) Entgegenhaltungen:
- WO-A-98/04381
- DE-A- 19 731 638
- US-A- 5 697 544
- US-A- 5 829 664
- US-A- 5 893 507

## Beschreibung

Die Erfindung betrifft ein Verfahren zum Verbinden von wenigstens zwei aneinanderliegenden Werkstücken nach der Methode des Reibschweißens, wobei die Werkstücke dabei einen Verbindungsbereich zwischen sich einschließen, mittels eines rotierend angetriebenen stiftartigen Vorsprungs, der bei seiner Rotation in Kontakt mit dem Verbindungsbereich der Werkstücke den Verbindungsbereich wenigstens teilweise plastifiziert, und eine Vorrichtung, mit der ein derartiges Verfahren ausgeführt werden kann.

Ein Verfahren und eine Vorrichtung ähnlicher Art sind bekannt (EP-B-0 615 480). Das Reibschweißen, vielfach auch FSW (Friction Stir Welding) genannt, ist vom Grundsatz her seit mehreren Jahren bekannt und ist immer weiterentwickelt worden. Ursprünglich wurde das Reibschweißen derart ausgeführt, daß zwei Werkstücke, die miteinander durch Reibschweißung verbunden werden sollen, gegeneinander im gewünschten Verbindungsbereich bewegt werden und dabei mit einer voreinstellbaren Kraft gegeneinander gedrückt werden. Durch die durch die Reibung entstehende Wärme erfolgt letztlich eine Plastifizierung des Werkstoffs der Werkstücke in dem Verbindungsbereich. Ist der Werkstoff ausreichend plastifiziert, kann zumindest im oberflächennahen Bereich der Verbindung eine ausreichende Durchmischung der Werkstoffe beider Werkstücke erfolgen, so daß bei Abkühlung die gewünschte Schweißverbindung zwischen beiden Werkstücken ausgebildet wird.

Bei dem eingangs genannten Verfahren bzw. der eingangs genannten Vorrichtung wird ein stiftartiger Vorsprung von einem Antrieb bzw. einem Motor in geeignet große Rotation versetzt, an den Stirnbereich zweier zu verbindender, nahezu stoßartig aneinander gelegter Werkstücke angesetzt und der stiftartige Vorsprung wird geeignet geführt, was beispielsweise mit einer speziellen Führungsvorrichtung oder auch mit einem Roboter geschehen kann, und zusätzlich beispielsweise in eine Translationsbewegung längs der Stoßkanten beider zu verbindender Werkstücke versetzt. Ist nach Beginn des Schweißvorganges durch die infolge der Rotation des stiftartigen Vorsprungs mit dem Werkstoff der Werkstücke der angrenzende Werkstoffbereich erzeugte Reibungswärme mit dem Werkstoff der Werkstoff ausreichend plastifiziert, wird unter Aufrechterhaltung der Rotationsbewegung des stiftartigen Vorsprungs die Translationsbewegung längs der Stoßkante zwischen den beiden Werkstücken ausgeführt, so daß beispielsweise eine Längsnaht ausgebildet wird.

Es ist bekannt, daß zum Verbinden zweier oder mehrerer metallischer Werkstücke sogenannte Punktschweißverbindungen hergestellt werden können, die vielfach gegenüber Niet- oder auch Schraubverbindungen den Vorteil haben, daß zur Ausbildung der Punktschweißverbindung keine zusätzlichen Verbindungselemente (Niete, Schrauben und dergleichen) verwendet werden müssen, und daß zudem die Punktschweißverbindung den Vorteil hat, daß die Ausbildung einer Punktschweißverbindung schneller vonstatten gehen kann, da keine die Niete bzw. die Schrauben aufnehmenden, die Werkstücke durchquerenden Bohrungen ausgebildet werden müssen, durch die die Niete bzw. die Schrauben hindurchgesteckt und dann durch die Ausbildung eines Nietkopfes bzw. das Verschrauben mit einer Mutter gegeneinander gedrückt bzw. miteinander verbunden werden müssen.

Während die Ausbildung einer Punktschweißverbindung zweier aneinanderliegender zu verbindender Werkstücke aus Eisen bzw. Stahl einschließlich seiner Legierungen mehr oder weniger unproblematisch mit handelsüblichen, eingeführten Punktschweißvorrichtungen durchzuführen möglich ist, ist die Ausbildung einer Punktschweißverbindung bei zwei oder mehreren aneinanderliegenden, zu verbindenden Werkstücken aus Aluminium bzw. Aluminiumlegierungen, wie sie beispielsweise im Flugzeugbau aber auch im Kraftfahrzeugbau Verwendung finden, bisher nach wie vor problematisch. Das hat seinen Grund darin, daß Aluminium bzw. Aluminiumlegierungen mit dem Sauerstoff der Umgebungsluft im Oberflächenbereich eine äußerst hinderliche Oxidschicht bildet, die einerseits einen beträchtlichen elektrischen Widerstand zwischen den zu verbindenden Werkstücken bildet und zudem in dem bei der Ausführung der Widerstandspunktschweißverbindungen entstehenden aufgeschmolzenen Schweißlinse enthalten ist, so daß Störungen aus Aluminiumoxiden in den plastifizierten Bereich der zu verbindenden Werkstücke eingelagert sind. Das führt dazu, daß die an sich im Idealfall gute Punktschweißverbindungen herkömmlicher Art insbesondere bei zu verbindenden Werkstücken aus Aluminium nicht die Festigkeit zeigen, die in vielen Verbindungsfällen unbedingt erforderlich sind.

Aus diesem Grunde ist insbesondere im Flugzeugbau, wo es bekanntermaßen auf allerhöchste Verbindungsgüten bei der Verbindung von Werkstücken ankommt, trotz vielfältiger Versuche und trotz des tatsächlich auch erfolgten Einsatzes von Punktschweißverbindungen herkömmlicher Art zur Ausbildung der erwähnten Nietverbindungen zwischen zu verbindenden Werkstücken zurückgegangen worden. Gleiches gilt sinngemäß auch für die Kraftfahrzeugindustrie, in der in zunehmendem Maße auch Aluminiumkonstruktionen im Chassis- und Karosseriebereich eingesetzt werden.

Aus der WO-A 98 04381 sind ein Verfahren und eine Vorrichtung zum Verbinden von wenigstens zwei aufeinander liegenden Werkstücken nach der Methode des Reibschweißens bekannt. Dabei wird ein rotierender einteiliger, zylindrischer Stempel durch ein oberes Werkstück bis in ein darunterliegendes Werkstück gepreßt, wobei die geschmolzene bzw. plastifizierte Werkstoffmenge zumindest teilweise in den Spalt zwischen den beiden Werkstücken hineingedrückt wird.

Aus der US-A-5,697,544 ist ein Reibschweißwerkzeug in Form eines Stifts bekannt, der in einer Hülse und von dieser geführt auf und ab bewegt wird.

Aufgabe der Erfindung ist es, eine Schweißverbindung von zwei Werkstücken und eine Vorrichtung zur Erzeugung einer derartigen Schweißverbindung zu schaffen, bei der die Ausbildung eines Loches nach Abschluß des Reibschweißverfahrens vermieden wird.

Gelöst wird diese Aufgabe durch die Merkmale der Patentansprüche 1 bzw. 5.

Vorteilhafte Ausgestaltungen der Erfindung sind Gegenstand der Unteransprüche.

Der plastifizierte Werkstoff wird dabei aufgefangen und bei der Herausbewegung des stiftartigen Vorsprungs in den Hohlraum zurückgepreßt.

Der Vorteil des erfindungsgemäßen Verfahrens besteht im wesentlichen darin, daß, anders als bei den bisherigen unterschiedlichen Verfahren zur Verbindung zweier oder mehrerer Werkstücke, keine Vorbereitung des Verbindungsortes erforderlich ist. Es müssen keine Löcher in den Werkstücken gebohrt werden, es sind keine zusätzlichen Verbindungsmittel erforderlich, es ist kein gesonderter Arbeitsvorgang, wie beispielsweise die Ausbildung eines Nietkopfes oder das Verschrauben einer Schraubverbindung mit einer Mutter und dergleichen, erforderlich, d.h. es entsteht, anders als beim Bolzenreibschweißen weder ein Wulst aus plastifiziertem Werkstoff sowie weder ein Loch noch eine Vertiefung, und es ist auch bei der Verwendung von Werkstücken aus Aluminium, Aluminiumlegierungen und sonstigen Leichtmetallen bzw. Legierungen, die erfindungsgemäß verbunden werden sollen, nur in sehr untergeordneter Form mit der Einbindung von geringen Oxidmengen zu rechnen, da der gesamte Verbindungsbereich aller zu verbindender Werkstücke plastifiziert und durchmischt wird, d.h. oberflächennahe Einbindungen von Oxidmengen, wie beim klassischen Punktschweißen, nicht auftreten können. Da sich der gesamte plastifizierte Werkstoff nach Ausführung des erfindungsgemäßen Verbindungsvorganges wiederum in den im Zuge der Ausführung des Verfahrens in den Werkstücken gebildet habenden Loches im Verbindungsbereich in das Loch zurückgepreßt wird, ist die Oberfläche auf der aktiven Seite, d.h. der Seite, die durch den stiftartigen Vorsprung beaufschlagt wird, völlig eben, wohingegen die Gegenseite, die durch das verfahrensmäßig letzte zu verbindende Werkstück gebildet wird, per se eben ist, da bei der Ausführung des Verfahrens diese nicht durchquert wird.

Um zu verhindern, daß bei der Ausführung des Verfahrens der durch das Eindringen des rotierenden stiftartigen Vorsprungs in das erste Werkstück hinein und durch die Werkstücke hindurch bzw. in das untere Werkstück hinein verdrängte Werkstoff unkontrolliert in die Umgebung abfließt und somit für die Ausführung der Verbindung nicht mehr zur Verfügung steht, wird der verdrängte Werkstoff vorzugsweise in der unmittelbaren Umgebung des rotierenden stiftartigen Vorsprungs gehalten.

Dabei wird vorteilhafterweise der verdrängte Werkstoff nach Abschluß der Plastifizierung der Werkstücke in wenigstens annähernd gleichem Maße, wie der stiftartige Vorsprung aus den Werkstücken herausbewegt wird, in die sich während der Plastifizierung ausgebildet habenden Löcher in den Werkstücken zurückgeführt, so daß sichergestellt ist, daß der gesamte plastifizierte Werkstoff die Schweißverbindung bildet und die Oberfläche des Werkstücks, von der aus der stiftartige Vorsprung in die Werkstücke eindringt, nach Abschluß der Ausbildung einer Verbindung wiederum vollständig plan ist. So steht gleichzeitig, anders als beim Bolzenreibschweißen, ein sehr großer tragender Querschnitt unter Scherbelastung zur Verfügung, was einer hohen ertragbaren Last gleichkommt.

Um für einen schnelleren Verfahrensablauf zu sorgen, ist es vorteilhaft, die zu verbindenden Werkstücke im Bereich der auszuführenden Punktschweißverbindung zu erwärmen, wobei es vorteilhaft sein kann, die zu verbindenden Werkstücke sowohl von der Seite, von der die Punktschweißverbindung ausgeführt wird, als auch von der dazu abgewandten Seite aus zu erwärmen. Diese Maßnahmen haben den Vorteil, daß nicht der gesamte Wärmeeintrag bei der Ausführung der erfindungsgemäßen Punktschweißverbindung durch Reibungswärme erfolgen muß, sondern eine gezielte Vorerwärmung dazu führt, daß lediglich die Differenzwärme zwischen Wärmeeintrag von außen und der durch die Reibschweißung erzeugten Wärme für die Plastifizierung des Werkstoffs durch den Reibschweißvorgang erfolgen muß.

Durch diese Maßnahme wird, wie angestrebt, der erfindungsgemäße Verfahrensablauf erheblich beschleunigt.

Die Vorrichtung zum Verbinden von wenigstens zwei aneinanderliegenden Werkstücken nach der Methode des Reibschweißens ist dadurch gekennzeichnet, daß der stiftartige Vorsprung im wesentlichen längs seiner Drehachse durch den sich plastifizierenden Werkstoff wenigstens eines ersten vom stiftartigen Vorsprung erfaßten Werkstücks hindurch bis wenigstens teilweise in ein letztes unteres sich plastifizierendes Werkstück hineinbewegbar ist.

Dabei gibt die den stiftartigen Vorsprung umschließende Hülle gleichzeitig den Raum für den plastifizierten Werkstoff frei.

Der Vorteil, der durch die erfindungsgemäße Vorrichtungslösung erreicht wird, entspricht im wesentlichen dem Vorteil, der oben im Zusammenhang mit der erfindungsgemäßen Verfahrenslösung genannt worden ist. Die Drehgeschwindigkeit des stiftartigen Vorsprungs ist dabei in Abhängigkeit der Werkstücke, der Anzahl der Werkstücke und des Werkstoffs der Werkstücke wählbar und einstellbar. Zudem kann die Drehgeschwindigkeit des stiftartigen Vorsprungs auch im Zuge der Ausbildung der Verbindung selbst variiert werden, insbesondere dann, wenn der stiftartige Vorsprung wenigstens teilweise in ein letztes unteres, sich plastifizierendes Werkstück hineinbewegt wird, d.h. um zu verhindern, daß die Plastifizierung derart im unteren Werkstück stattfindet, um ein Durchbrechen der äußeren Oberfläche des unteren Werkstücks bzw. eine Plastifizierung dieser Oberfläche zu vermeiden.

Bei einer anderen erfindungsgemäßen Lösung der Vorrichtung zum Verbinden von wenigstens zwei aufeinanderliegenden Werkstücken nach der Methode des Reibschweißens, bei der die Werkstücke dabei einen Verbindungsbereich zwischen sich einschließen und vorrichtungsseitig eine rotierend antreibbare Achse vorgesehen ist, an der ein Reibschweißwerkzeug angeordnet ist, ist lösungsgemäß dadurch gekennzeichnet, daß als Reibschweißwerkzeug ein Hülsenelement vorgesehen ist, das durch die Achse angetrieben wird und bei seiner Rotation in Kontakt mit dem Verbindungsbereich des zum Hülsenelement gerichteten Werkstücks bringbar ist, wobei das Hülsenelement im wesentlichen längs seiner Drehachse durch den sich plastifizierenden Werkstoff wenigstens des ersten Werkstücks hindurch bis wenigstens teilweise in ein letztes unteres sich plastifizierendes Werkstück hinein bewegbar ist.

Auch bei diesem weiteren Lösungsweg der Vorrichtung wird auf die Vorteile im Zusammenhang mit dem erfindungsgemäßen Verfahren und dem erfindungsgemäßen ersten Lösungsweg für eine Vorrichtung verwiesen, wobei aber dieser zweite Lösungsweg für bestimmte Anwendungsfälle den Vorteil hat, daß durch das Hülsenelement als Reibschweißwerkzeug ein größerer Schweißpunktdurchmesser erreicht wird.

Vorteilhafterweise ist der stiftartige Vorsprung bei der ersten Lösung von einem mit diesem zusammen rotierend antreibbaren ersten Hülsenelement umgeben, wobei bei axialer Bewegung des stiftartigen Vorsprungs in die Werkstücke hinein bzw. durch diese hindurch das erste Hülsenelement eine Bewegung in entgegengesetzter axialer Richtung ausführt. Somit wird der durch die Plastifizierung infolge des Eindringens des stiftartigen Vorsprungs in die Werkstücke hinein ausgeübte Bewegungsvorgang gezielt zur axialen Verschiebung der ersten Hülse in axial entgegengesetzter Richtung zur Eindringrichtung des stiftartigen Vorsprungs in die Werkstücke hinein genutzt, wobei die erste Hülse sich dann, wenn die gewünschte Tiefe des Schweißpunktes erreicht ist und der stiftartige Vorsprung aus den Werkstücken herausgeleitet wird, in axial dazu entgegengesetzter Richtung wieder auf die Werkstücke zu bewegt, um den plastifizierten Werkstoff gezielt in den Plastifizierungsbereich der Werkstücke hineinzudrücken.

Bei der zweiten vorgeschlagenen Lösung der erfindungsgemäßen Vorrichtung ist es ebenfalls vorteilhaft, daß das stiftartige Hülsenelement in seinem Innenraum einen stiftartigen Vorsprung aufweißt, wobei bei axialer Bewegung des Hülsenelementes in die Werkstücke hinein bzw. durch diese hindurch der stiftartige Vorsprung eine Bewegung in entgegengesetzter axialer Richtung ausführt. Dabei gibt der stiftartige Vorsprung den Raum für den plastifizierten und verdrängten Werkstoff frei, was vorteilhaft im Zusammenhang mit der Ausbildbarkeit größerer Schweißpunktdurchmesser durch Verwendung des Hülsenelementes als Reibschweißwerkzeug ist.

Vorteilhafterweise ist der Betrag der axialen Bewegung des stiftartigen Vorsprungs und des ersten Hülsenelements derart gewählt, daß der Betrag im wesentlichen gleich ist, d.h., daß entsprechend der Angriffsfläche des stiftartigen Vorsprungs und des ersten Hülsenelements die verschobenen Werkstoffvolumina im wesentlichen gleich sind oder derart angepaßt, daß der plastifizierte Werkstoff während des gesamten Fügevorgangs unter einem gewissen hydrostatischen Druck gehalten wird, um insbesondere Zurückpressen des Werkstoffs eine optimale Anbindung an den Werkstoff der zu fügenden Werkstücke zu gewährleisten. Dadurch kann auf einfache Weise gewährleistet werden, daß tatsächlich der gesamte plastifizierte Werkstoff nach Abschluß der Ausbildung der Verbindung wiederum in die Werkstücke bzw. in den Plastifizierungsbereich beider oder aller Werkstücke zurücküberführt wird.

Um dabei sicherzustellen, daß plastifizierter Werkstoff sowohl im Zuge des Eindringens des stiftartigen Vorsprungs in die Werkstücke hinein als auch im Zuge der Bewegung des stiftartigen Vorsprungs aus den Werkstücken hinaus nicht unkontrolliert in den Umgebungsbereich der Vorrichtung abfließt, ist vorteilhafterweise der stiftartige Vorsprung mit einem nicht rotierenden äußeren zweiten Hülsenelement umgeben, mit dem die Werkstücke zu Beginn der Ausführung des Verbindungsvorganges aneinander gedrückt werden. Dieses äußere zweite Hülsenelement hat somit einerseits die Aufgabe, die zu verbindenden Werkstücke wenigstens im Bereich der auszubildenden Verbindung im Zusammenwirken mit einem Gegenlager aneinander zu drücken, so daß zunächst im Verbindungsbereich der Werkstücke keine Spalten zwischen den Werkstücken vorhanden sind, und eine äußere Hülle zu bilden, die es dem plastifizierten Werkstoff im Zuge des Eindringens des stiftartigen Vorsprungs in die Werkstücke und des Herausziehens des stiftartigen Vorsprungs aus den Werkstücken nicht ermöglicht, unkontrolliert zu den Seiten abzufließen.

Dabei wird vorteilhafterweise das erste Hülsenelement, das zusammen mit dem stiftartigen Vorsprung rotiert, in dem äußeren zweiten Hülsenelement geführt.

Grundsätzlich ist es möglich, die axiale Bewegbarkeit des stiftartigen Vorsprungs und die axiale Bewegbarkeit des ersten Hülsenelements in entgegengesetzter Richtung dazu durch äußere Mittel erfolgen zu lassen, beispielsweise durch einen geeignet ausgebildeten Arbeits- und Werkzeugkopf eines Fertigungsroboters. Um aber die Steuerungssequenzen eines Roboters oder einer sonstigen Einrichtung, mit der die erfindungsgemäße Vorrichtung betrieben wird, so weit wie möglich vom Fertigungsroboter bzw. von der Einrichtung fernzuhalten und ggf. schnell bei Betriebsstörungen die Vorrichtung gegen eine andere austauschen zu können, ohne eine Programmierung des Fertigungsroboters bzw. der Einrichtung vornehmen zu müssen, wird die Vorrichtung vorteilhafterweise derart ausgestaltet, daß die Steuerung der axialen Bewegbarkeit des stiftartigen Vorsprungs und die damit gekoppelte Steuerung der axialen Bewegbarkeit des ersten Hülsenelements in dazu entgegengesetzter Richtung durch als Wendelnuten in einem Stellringelement ausgebildete Kulissenführungen über darin hineingreifende Stellbolzen steuerbar ausgebildet, d.h. die axiale Bewegbarkeit des stiftartigen Vorsprungs und die damit gekoppelte axiale Bewegbarkeit des ersten Hülsenelements wird vorrichtungsintern realisiert.

Dazu ist vorteilhafterweise ein Gehäuse vorgesehen, in dem das Stellringelement mittels eines vom Gehäuseäußeren aus betätigbaren Handhebels drehbar aufgenommen wird.

Grundsätzlich kann der stiftartige Vorsprung in unmittelbarer axialer Verlängerung mit dem Ende einer Antriebsachse oder selbst auch noch als Antriebsachse ausgebildet sein, die beispielsweise in einen Roboter geeignet eingespannt wird. Da der stiftartige Vorsprung aber einer sehr großen mechanischen und thermischen Belastung bei der Ausführung einer Verbindung gemäß der Erfindung ausgesetzt ist, ist es vorteilhaft, den stiftartigen Vorsprung als gesondertes Teil auszubilden, um diesen im Bedarfsfalle schnell auswechseln zu können. Dazu ist vorteilhafterweise ein in der Vorrichtung rotierend aufgenommenes Stifthalteelement vorgesehen, mit dem der stiftförmige Vorsprung lösbar verbindbar und auch rotierend antreibbar ist.

Da zur Ausführung einer Verbindung gemäß der Erfindung mehrerer Werkstücke der stiftartige Vorsprung eine Bewegung in axialer Richtung auf die Werkstücke zu ausführen muß, müßte die Vorrichtung, wenn sie beispielsweise in einem Fertigungsroboter oder eine sonstige geeignete Einrichtung eingespannt ist, entsprechend der axialen Bewegung verschoben werden, wobei diese Verschiebung beispielsweise der Antriebskopf eines Fertigungsroboters ausführen müßte. Um den Roboter von dieser Bewegungssequenz in beiden axialen Richtungen zu befreien und diese Möglichkeit der Bewegung auf die Vorrichtung selbst zu verlagern, ist es vorteilhaft, in das Stifthalteelement ein Wellenelement in Rotationsrichtung fest aber axial verschiebbar eingreifen zu lassen.

Vorzugsweise ist der stiftartige Vorsprung im Querschnitt kreisförmig ausgebildet, d.h. er weißt eine im wesentlichen zylindrische Struktur auf. Es ist aber nicht zwingend, daß der stiftartige Vorsprung im Querschnitt kreisförmig ausgebildet ist, d.h. grundsätzlich eine beliebige geeignete Querschnittsform aufweisen kann.

Ebenso ist das Hülsenelement vorzugsweise mit einem im Querschnitt kreisförmigen axialen Durchgangsloch versehen, in dem der stiftartige Vorsprung aufgenommen und geführt wird, wobei der stiftartige Vorsprung in diesem Zusammenhang auch nicht zwingend im Querschnitt kreisförmig ausgebildet sein muß, denn es würde genügen, daß die Querschnittsform des stiftartigen Vorsprungs derart gestaltet ist, daß eine drehsymmetrische Führung des stiftartigen Vorsprungs im Hülsenelement gewährleistet ist.

Schließlich kann es auch vorteilhaft sein, das Hülsenelement mit einem im Querschnitt nicht kreisförmigen axialen Durchgangsloch zu versehen, in dem der stiftartige Vorsprung aufgenommen und geführt wird. Dabei ist das Querschnittsprofil des stiftartigen Vorsprungs an das Querschnittsprofil des Durchgangslochs des Hülsenelements angepaßt, wobei grundsätzlich beliebige geeignete Querschnittsprofile sowohl des Durchgangslochs des Hülsenelements als auch des stiftartigen Vorsprungs möglich sind.

Die Erfindung wird nun unter Bezugnahme auf die nachfolgenden schematischen Zeichnungen anhand eines Ausführungsbeispieles eingehend beschrieben. Darin zeigen:
- Fig. 1a. bis Fig. 1e.: im Schnitt den schematischen Aufbau eines Kopfes der Vorrichtung 10, umfassend einen stiftartigen Vorsprung, ein erstes und ein zweites Hülsenelement, zwei beispielhaft zu verbindende Werkstücke und in unterschiedlichen Schritten zur Ausbildung einer Verbindung zweier Werkstücke den sich durch Plastifizierung des Werkstoffs der Werkstücke bildenden Verbindungsbereich vom Beginn der Ausbildung der Verbindung an bis zu ihrem Abschluß und
- Fig. 2: in Form einer auseinandergezogenen Darstellung eine Vorrichtung gemäß der Erfindung in beispielhaft realisierter Form.

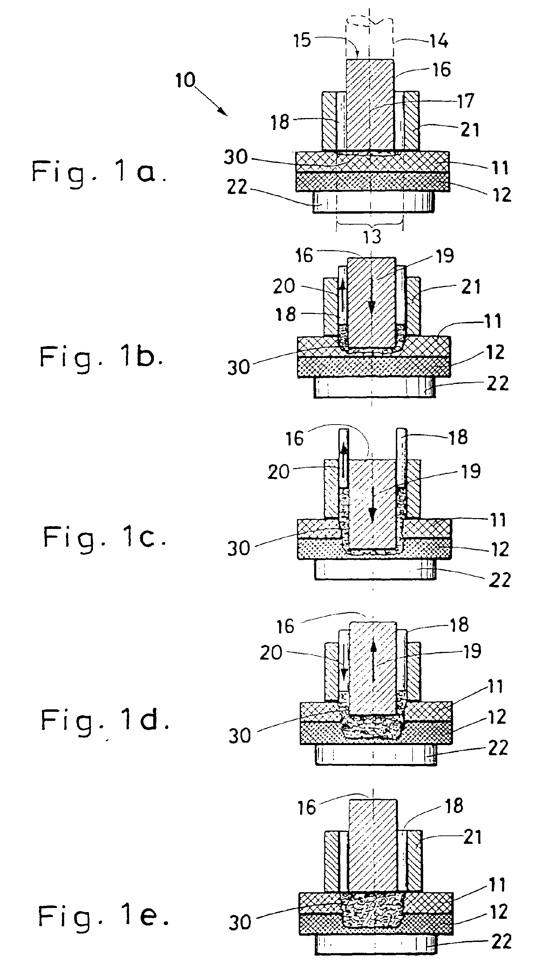

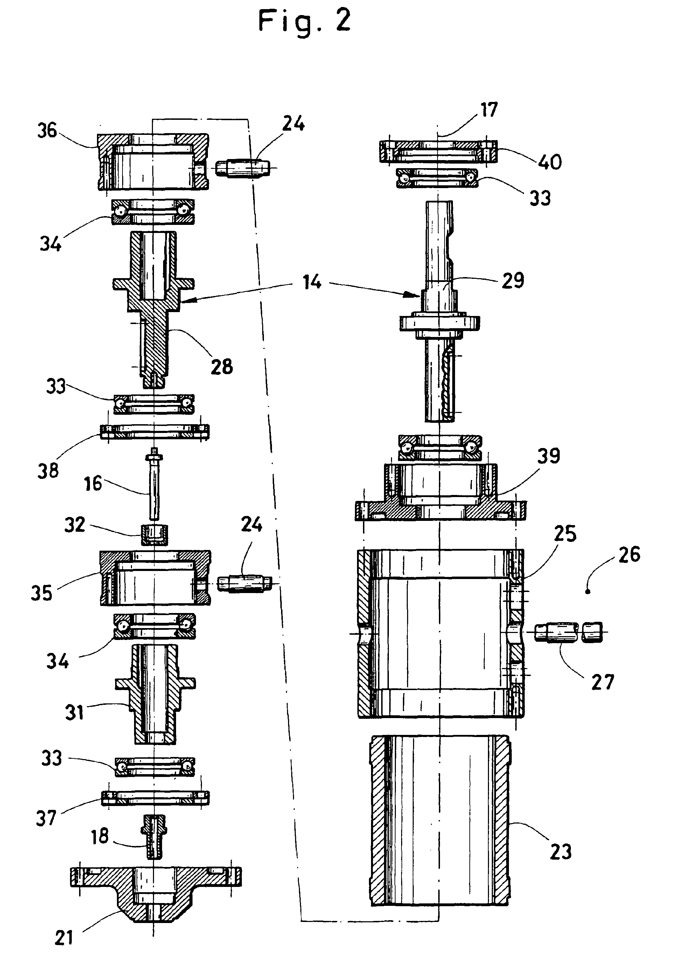

Es wird zunächst Bezug genommen auf Fig. 2, in der eine Vorrichtung 10, mit der auch das hier beschriebene Verfahren ausgeführt werden kann, in auseinandergezogener Darstellung dargestellt ist. Kernelemente der Vorrichtung 10 sind der stiftartige Vorsprung 16, das erste Hülsenelement 18, das zweite Hülsenelement 21 sowie die Antriebsachse 14, die hier aus dem Stifthalteelement 28 und dem Wellenelement 29 gebildet werden, vergleiche auch die entsprechenden Elemente in Fig. 1a. bis Fig. 1e.. Der stiftartige Vorsprung 16 und das erste Hülsenelement 18 können einen kreisförmigen Querschnitt aufweisen, sie können aber auch geeignet profiliert sein, so daß sich ein Transportkanal für den plastifizierten Werkstoff 30 ergibt. Der stiftartige Vorsprung 16, der im ersten Hülsenelement 18 aufgenommen wird, und das erste Hülsenelement 18 selbst werden im zweiten Hülsenelement 21, das hier in Form eines Gehäusebodens der Vorrichtung 10 ausgebildet ist, geführt.

Zur Übertragung axialer Kräfte wird das erste Hülsenelement 18 in einen Hülsenhalter 31 eingeschraubt. Der stiftartige Vorsprung 16 wird mit Hilfe einer Stiftmutter 32 am Stifthalteelement 28 befestigt. Der Hülsenhalter 31 mit dem ersten Hülsenelement 18 ist genau wie das Stifthalteelement 28 mit dem stiftartigen Vorsprung 16 drehbar gelagert. Der Hülsenhalter 31 und das Stifthalteelement 28 sind über Lager 33, 34 in Haltelagerträgern 35, 36 gelagert. Mittels Halteringen 37, 38 werden die Lagerpakete zusammengehalten. Die Haltelagerträger 35, 36 gleiten axial im Stellring 23 und gewährleisten so die axiale Bewegung des ersten Hülsenelements 18 und des stiftartigen Vorsprungs 16. Die Haltelagerträger 35, 36 sind gegen ein Verdrehen gesichert. Dieses wird durch Stellbolzen 24, beispielsweise je drei, bewirkt, die durch das Stellringelement 23 hindurch (Durchbrüche hier nicht dargestellt) in im ringförmig ausgebildeten Gehäuse 25 Nuten (hier nicht dargestellt) greifen, die nur eine axiale Bewegung zulassen.

Das Stellringelement 23 ist drehbar im Gehäuse 25 gelagert. Axiale Bewegungen werden durch die Lagerung im als Gehäuseboden fungierenden zweiten Hülsenelement 21 und im als Gehäuseabschluß fungierenden Wellenlagerträger 39 unterbunden. Das Stellringelement 23 weist dort, wo die Stellbolzen 24 von den Haltelagerträgern 35, 36 zum Stellringelement 23 durchstoßen, Wendelnuten auf. Es ergibt sich somit eine Steigung der Wendelnuten gegenüber der Drehachse 17. Eine Verdrehung des Stellringelements 23 bewirkt eine axiale Bewegung des ersten Hülsenelements 18 und des stiftartigen Vorsprungs 16. Die Verdrehung wird über einen Handhebel 27 von außen 26 erreicht, der in das Stellringelement 23 eingeschraubt wird. Der Handhebel 27 wird in einer am Umfang des Stellringelements geführten Nut (nicht dargestellt) geführt.

Das für den Betrieb der Vorrichtung 10 notwendige Drehelement wird über das einen Teil der Achse 14 bildende Wellenelement 29 eingeleitet, beispielsweise angetrieben durch einen hier nicht dargestellten Fertigungsroboter oder eine sonstige Antriebseinrichtung, und über eine Gleitfeder zum ebenfalls zur Antriebsachse 14 gehörigen Stifthalter 28 übertragen. Der Stifthalter 28 ist wiederum über eine Gleitfeder mit dem Hülsenhalter 31 verbunden. So kann das erforderliche Drehmoment zum stiftartigen Vorsprung 16 und zum ersten Hülsenelement 18 übertragen werden. Das Wellenelement 29 ist im Wellenlagerträger 39 über die Lager 33, 34 gelagert. Eine Deckscheibe 40 sichert das Lagerpaket.

Das Wellenelement 29 besitzt an seiner einen Seite ein für eine Werkzeugaufnahme (Fertigungsroboter, Antriebseinrichtung) passendes Profil. Am Gehäuse 25 ist ein Haltehebel angebracht, über den das Mitdrehen der Vorrichtung 10 bei einer Einleitung eines Drehmoments in das Wellenelement verhindert wird.

Zur Ausführung des Verfahrens mit der vorbeschriebenen Vorrichtung 10, vergleiche auch die Fig. 1a. bis 1c., wird die Vorrichtung 10 mit ihrem Wellenelement 29 in eine Werkzeugaufnahme einer Antriebseinheit (Fertigungsroboter, Antriebseinrichtung) eingeführt und fixiert. Unter der Vorrichtung 10 werden zwei Werkstücke 11, 12, beispielsweise in Form von Werkstücken aus Aluminium oder Aluminiumlegierungen, aufeinander fixiert. Dabei wird unter der Vorrichtung ein Gegenlager 22 postiert. Über die Antriebseinheit werden die drehenden Teile der Vorrichtung 10, nämlich das erste Hülsenelement 18 sowie der stiftartige Vorsprung 16, auf die für die Ausbildung einer Punktschweißverbindung nötige Drehzahl gebracht. Die Vorrichtung 10 wird dabei mit dem Handhebel festgehalten, wobei diese Halterung natürlich auch durch das Antriebswerkzeug (Fertigungsroboter, Antriebseinrichtung) bewirkt werden kann. Zunächst wird das zweite Hülsenelemente 21, das den Gehäuseboden der Vorrichtung 10 darstellt, mit der Oberseite eines hier in den Fig. 1a. bis 1e. oben dargestellten Werkstücks 11 durch Zuführung der Vorrichtung 10 in Kontakt gebracht. Der Werkstoff des oberen Werkstücks 11 wird unter dem rotierenden stiftartigen Vorsprung 16 und zunächst auch dem rotierenden ersten Hülsenelement 18 plastifiziert.

Durch Betätigung des Handhebels 27, ggf. auch durch den Fertigungsroboter oder einer sonstigen Antriebseinrichtung, wird das Stellringelement 23 verdreht. Ober die erwähnten Wendelnuten, die Stellbolzen 24 und den Haltelagerträger 35 wird das Stifthalteelement 28 mit dem stiftartigen Vorsprung 16 herunterbewegt entsprechend dem Pfeil 19. Der stiftartige Vorsprung 16 dringt in den Werkstoff ein, vergleiche Fig. 1b.. Das erste Hülsenelement 18 wird aufgrund des vorbeschriebenen Mechanismusses entsprechend dem Pfeil 20 in entgegengesetzter axialer Richtung bewegt. Dazu sind auf vorbeschriebene Weise ausgebildete Wendelnuten, hier jedoch in entsprechend entgegengesetzter Richtung ausgebildet, vorgesehen. Das erste Hülsenelement 28 schafft aufgrund der entgegengesetzten axialen Bewegung 20 zur axialen Bewegung 19 des stiftartigen Vorsprunges 16 ein Raumvolumen, in den das durch den in die Werkstücke 11, 12 stiftartigen Vorsprung 16 erzeugte Volumen des plastifizierten Werkstoffs 30 eindringen kann. Ist die gewünschte axiale Eindringtiefe erreicht, vergleiche Fig. 1c., wird der Handhebel 27 zurückbewegt. Nun öffnet der sich in seine Ausgangsstellung zurückbewegende stiftartige Vorsprung 16 das Raumvolumen der Löcher in den Werkstücken 11, 12 für den durch das erste Hülsenelement 18 zurückgedrückten Werkstoff. Wenn der Handhebel 27 wieder in seiner Ausgangsstellung ist, kann die Vorrichtung 10 von den Werkstücken 11, 12 abgehoben werden.

Es sei in diesem Zusammenhang noch darauf hingewiesen, daß im vorbeschriebenen Beispiel lediglich zwei Werkstücke 11, 12 vorgesehen sind, die mittels der erfindungsgemäßen Punktschweißverbindung miteinander verbunden werden sollen. Es ist mit der Vorrichtung 10 bzw. dem erfindungsgemäßen Verfahren ebenfalls möglich, mehr als zwei Werkstücke miteinander zu verbinden. Die Verfahrensführung ändert sich als solche dabei grundsätzlich nicht. Auch die Vorrichtung 10 behält dabei ihren vorbeschriebenen prinzipiellen Aufbau bei.

### Bezugszeichenliste

- 10: Vorrichtung
- 11: Werkstück
- 12: Werkstück
- 13: Verbindungsbereich
- 14: Achse
- 15: Ende (Achse)
- 16: stiftartiger Vorsprung
- 17: Drehachse
- 18: erstes Hülsenelement
- 19: axiale Bewegung (stiftartiger Vorsprung)
- 20: entgegengesetzte axiale Bewegung (erstes Hülsenelement)
- 21: zweites Hülsenelement
- 22: Gegenlager
- 23: Stellringelement
- 24: Stellbolzen
- 25: Gehäuse
- 26: Gehäuseäußeres
- 27: Handhebel
- 28: Stifthalteelement
- 29: Wellenelement
- 30: plastifizierter Werkstoff
- 31: Hülsenhalter
- 32: Stiftmutter
- 33: Lager
- 34: Lager
- 35: Haltelagerträger
- 36: Haltelagerträger
- 37: Haltering
- 38: Haltering
- 39: Wellenträger
- 40: Deckscheibe

## Patentansprüche

1. Verfahren zum Verbinden von wenigstens zwei aneinanderliegenden Werkstücken nach der Methode des Reibschweißens, wobei die Werkstücke dabei einen Verbindungsbereich zwischen sich einschließen, mittels eines rotierend angetriebenen stiftartigen Vorsprungs, der bei seiner Rotation in Kontakt mit dem Verbindungsbereich der Werkstücke den Verbindungsbereich wenigstens teilweise plastifiziert, wobei der stiftartige Vorsprung zur Ausführung einer Punktschweißverbindung durch den sich plastifizierenden Werkstoff wenigstens des ersten zum stiftartigen Vorsprung gerichteten Werkstücks hinein und hindurch bis wenigstens teilweise in ein letztes unteres sich plastifizierendes Werkstück hinein und nachfolgend wieder aus den Werkstücken heraus bewegt wird, so daß sich der plastifizierte Werkstoff aller Werkstücke verbindet, **dadurch gekennzeichnet, daß** der verdrängte Werkstoff nach Abschluß der Plastifizierung der Werkstücke in wenigstens annähernd gleichem Maße wie der stiftartige Vorsprung aus den Werkstücken herausbewegt wird, in die sich während der Plastifizierung ausgebildet habenden Löcher zurückgeführt wird.

2. Verfahren nach Anspruch 1, **dadurch gekennzeichnet, daß** der durch das Eindringen des rotierenden stiftartigen Vorsprungs in ein erstes Werkstück hinein und durch die Werkstücke hindurch bzw. in das untere Werkstück hinein verdrängte Werkstoff in der unmittelbaren Umgebung des rotierenden stiftartigen Vorsprungs gehalten wird.

3. Verfahren nach Anspruch 1 oder 2 **, dadurch gekennzeichnet, daß** die zu verbindenden Werkstücke im Bereich der auszuführenden Punktschweißverbindung erwärmt werden.

4. Verfahren nach Anspruch 3, **dadurch gekennzeichnet, daß** die zu verbindenden Werkstücke sowohl von der Seite, von der aus die Punktschweißverbindung, ausgeführt wird, als auch von der dazu abgewandten Seite aus erwärmt wird.

5. Vorrichtung (10) zum Verbinden von wenigstens zwei aneinanderliegenden Werkstücken (11, 12) nach der Methode des Reibschweißens, wobei die Werkstücke (11, 12) dabei einen Verbindungsbereich (13) zwischen sich einschließen, umfassend eine rotierend antreibbare Achse (14), an deren antriebsabgewandtem Ende (15) als Reibschweißwerkzeug ein stiftartiger Vorsprung (16, 18) ausgebildet ist, der bei seiner Rotation in Kontakt mit dem Verbindungsbereich (13) der Werkstücke (11, 12) den Verbindungsbereich (13) wenigstens teilweise plastifiziert wird, wobei der stiftartige Vorsprung (16,18) im wesentlichen längs seiner Drehachse (17) durch den sich plastifizierenden Werkstoff wenigstens eines ersten zum stiftartigen Vorsprung gerichteten Werkstücks (11) hindurch bis wenigstens teilweise in ein letztes unteres sich plastifizierendes Werkstück (12) hinein bewegbar ist, **dadurch gekennzeichnet, daß** als Reibschweißwerkzeug ein Hülsenelement (18) vorgesehen ist, das den stiftartigen Vorsprung (16) umgibt, wobei bei axialer Bewegung (19) des stiftartigen Vorsprungs (16) in die Werkstücke (11) hinein bzw. durch diese hindurch das erste Hülsenelement (18) eine Bewegung in entgegengesetzter axialer Richtung ausführt.

6. Vorrichtung nach Anspruch 5, **dadurch gekennzeichnet, daß** der Betrag der axialen Bewegung (19) des stiftartigen Vorsprungs (16) und des ersten Hülsenelements (18) im wesentlichen gleich ist.

7. Vorrichtung nach Ansprüche 5 oder 6 **dadurch gekennzeichnet, daß** der stiftartige Vorsprung (16) von einem nicht rotierenden äußeren zweiten Hülsenelement (21) umgeben ist, mit dem die Werkstücke (11, 12) bei der Ausführung des Verbindungsvorganges gegeneinander drückbar sind.

8. Vorrichtung nach Anspruch 7, **dadurch gekennzeichnet, daß** das erste Hülsenelement (18) in dem äußeren zweiten Hülsenelement (21) geführt wird.

9. Vorrichtung nach einem der Ansprüche 5 bis 8 , **dadurch gekennzeichnet, daß** die axiale Bewegbarkeit (19) des stiftartigen Vorsprungs (16) und die damit gekoppelte axiale Bewegbarkeit (20) des ersten Hülsenelements (18) in entgegengesetzter Richtung durch als Wendelnuten in einem Stellringelement (23) ausgebildete Kulissenführungen über darin hineingreifende Stellbolzen (24) steuerbar ist.

10. Vorrichtung nach Anspruch 9, **dadurch gekennzeichnet, daß** ein Gehäuse (25) vorgesehen ist, in dem das Stellringelement (23) mittels eines vom Gehäuseäußeren (26) aus betätigbaren Handhebels (27) drehbar aufgenommen wird.

11. Vorrichtung nach einem der Ansprüche 5 bis 10, **dadurch gekennzeichnet, daß** ein Stifthalteelement (28) vorgesehen ist, mit dem der stiftförmige Vorsprung (16) lösbar verbindbar und rotierend antreibbar ist.

12. Vorrichtung nach Anspruch 11, **dadurch gekennzeichnet, daß** in das Stifthalteelement (28) ein Wellenelement (29) in Rotationsrichtung fest aber axial verschiebbar eingreift.

13. Vorrichtung nach einem oder mehreren der Ansprüche 5 bis 12, **dadurch gekennzeichnet, daß** der stiftartige Vorsprung (16) im Querschnitt kreisförmig ausgebildet ist.

14. Vorrichtung nach einem oder mehreren der Ansprüche 5 bis 12, **dadurch gekennzeichnet, daß** der stiftartige Vorsprung (16) im Querschnitt nicht kreisförmig ausgebildet ist.

15. Vorrichtung nach einem oder mehreren der Ansprüche 5 bis 13, **dadurch gekennzeichnet, daß** das Hülsenelement (18) ein im Querschnitt kreisförmiges axiales Durchgangsloch aufweist, in dem der stiftartige Vorsprung (16) aufgenommen und geführt wird.

16. Vorrichtung nach einem oder mehreren der Ansprüche 5 bis 14, **dadurch gekennzeichnet, daß** das Hülsenelement (18) ein im Querschnitt nicht kreisförmiges axiales Durchgangsloch aufweist, im dem der stiftartige Vorsprung (16) aufgenommen und geführt wird.

## Claims

1. Method for joining at least two workpieces lying one against the other using the friction welding method, wherein the workpieces define a joint region between them, by means of a pin-like nose driven in rotation which during rotation in contact with the joint region of the workpieces plasticises the joint region at least partially, wherein the pin-like nose is moved for realising a spot weld joint into and through the plasticising material of at least the first workpiece facing the pin-like nose and as far as at least partially into a last lower plasticising workpiece and then out of the workpieces again in such a manner that the plasticised material of all workpieces is joined, **characterised in that** after plasticisation of the workpieces the displaced material is fed back into the holes having formed during the plasticisation to at least virtually the same extent as the pin-like nose is moved out of the workpieces.

2. Method according to claim 1, **characterised in that** the material displaced through the penetration of the rotating pin-like nose into a first workpiece and through the workpieces into the lower workpiece is held in the direct vicinity of the rotating pin-like nose.

3. Method according to claim 1 or 2, **characterised in that** the workpieces to be joined are heated in the region of the spot weld joint to be realised.

4. Method according to claim 3, **characterised in that** the workpieces to be joined are heated from the side from which the spot weld joint is realised and also from the side facing away from it.

5. Device (10) for joining at least two workpieces (11, 12) lying one against the other using the friction welding method, wherein the workpieces (11, 12) thereby define a joint region (13) between them, comprising a shaft (14) which can be driven in rotation, on the drive-remote end (15) of which a pin-like nose (16, 18) is formed as a friction welding tool which during its rotation in contact with the joint region (13) of the workpieces (11, 12) plasticises the joint region (13) at least partially, wherein the pin-like nose (16, 18) is adapted to be moved substantially along its rotation axis (17) through the plasticising material of at least a first workpiece (11) facing the pin-like nose as far as at least partially into a last lower plasticising workpiece (12), **characterised in that** a sleeve element (18) is provided as a friction welding tool which surrounds the pin-like nose (16), wherein upon axial movement (19) of the pin-like nose (16) into the workpieces (11) and through these the first sleeve element (18) moves in the opposite axial direction.

6. Device according to claim 5, **characterised in that** the amount of axial movement (19) of the pin-like nose (16) is substantially equal to that of the first sleeve element (18).

7. Device according to claim 5 or 6, **characterised in that** the pin-like nose (16) is surrounded by a nonrotating second outer sleeve element (21), with which the workpieces (11, 12) can be pushed against each other during the realisation of the joining process.

8. Device according to claim 7, **characterised in that** the first sleeve element (18) is guided in the second outer sleeve element (21).

9. Device according to one of the claims 5 to 8, **characterised in that** the axial movability (19) of the pin-like nose (16) and the axial movability (20) coupled thereto of the first sleeve element (18) in the opposite direction can be controlled by sliding guides formed as helical grooves in an adjusting ring element (23) via adjusting bolts (24) engaging therein.

10. Device according to claim 9, **characterised in that** a housing (25) is provided, in which the adjusting ring element (23) is received so as to be rotatable by means of a hand lever (27) which can be actuated from outside of the housing (26).

11. Device according to one of the claims 5 to 10, **characterised in that** a pin holding element (28) is provided, with which the pin-like nose (16) can be connected so as to be releasable and driven in rotation.

12. Device according to claim 11, **characterised in that** a shaft element (29) engages in the pin holding element (28) in the direction of rotation in a fixed but axially displaceable way.

13. Device according to one or more of the claims 5 to 12, **characterised in that** the pin-like nose (16) is formed with a circular cross-section.

14. Device according to one or more of the claims 5 to 12, **characterised in that** the pin-like nose (16) is formed with a non-circular cross-section.

15. Device according to one or more of the claims 5 to 13, **characterised in that** the sleeve element (18) comprises an axial passage hole with a circular cross-section, in which the pin-like nose (16) is received and guided.

16. Device according to one or more of the claims 5 to 14, **characterised in that** the sleeve element (18) comprises an axial passage hole with a non-circular cross-section, in which the pin-like nose (16) is received and guided.

## Revendications

1. Procédé pour relier au moins deux pièces placées l'une à côté de l'autre selon la méthode du soudage par friction, dans lequel :
- les pièces incluent alors entre elles une zone de liaison, au moyen d'une saillie en forme de goupille entraînée en rotation qui plastifie au moins partiellement la zone de liaison pendant sa rotation en contact avec la zone de liaison des pièces ; et
- pour exécuter une liaison de soudage par point, la saillie en forme de goupille est déplacée jusque dans et jusqu'à travers le matériau se plastifiant au moins de la première pièce orientée vers la saillie en forme de goupille et au moins partiellement jusque dans une dernière pièce inférieure se plastifiant et ensuite en dehors de ladite pièce, de sorte que le matériau de toutes les pièces, lequel se plastifie, se relie,
**caractérisé en ce que** le matériau refoulé est déplacé après l'achèvement de la plastification des pièces dans une mesure au moins approximativement égale à la distance sur laquelle la saillie en forme de goupille est déplacée en dehors des pièces et est reconduite dans les trous qui se sont formés pendant la plastification.

2. Procédé selon la revendication 1, **caractérisé en ce que**, grâce à la pénétration de la saillie en forme de goupille en rotation jusque dans une première pièce et à travers les pièces ou jusque dans la pièce inférieure, le matériau refoulé est maintenu dans le proche environnement de la saillie en forme de goupille en rotation.

3. Procédé selon la revendication 1 ou 2, **caractérisé en ce que** les pièces à relier sont échauffées dans la zone de la liaison de soudage par point à exécuter.

4. Procédé selon la revendication 3, **caractérisé en ce que** les pièces à relier sont échauffées aussi bien par le côté depuis lequel la liaison de soudage par point est exécutée que par le côté qui lui est détourné.

5. Dispositif (10) pour relier au moins deux pièces (11, 12) placées l'une à côté de l'autre selon la méthode du soudage par friction dans lequel :
- les pièces (11, 12) incluent alors entre elles une zone de liaison (13), comportant un axe (14) pouvant être entraîné en rotation, une saillie en forme de goupille (16, 18) étant réalisée comme outil de soudage par friction sur son extrémité (15) détournée de l'entraînement, saillie qui plastifie au moins partiellement la zone de liaison (13) pendant sa rotation en contact avec la zone de liaison (13) des pièces (11, 12) ; et
- la saillie en forme de goupille (16, 18) peut être déplacée essentiellement le long de son axe de rotation (17) à travers le matériau se plastifiant, à travers au moins une première pièce (11) orientée vers la saillie en forme de goupille jusque dans une dernière pièce inférieure se plastifiant (12) au moins partiellement,
**caractérisé en ce qu'**un élément à douille (18) qui entoure la saillie en forme de goupille (16) est prévu comme outil de soudage par friction, sachant que, pendant le mouvement axial (19) de la saillie en forme de goupille (16) jusque dans les pièces (11) ou à travers celles-ci, le premier élément à douille (18) exécute un mouvement dans la direction axiale opposée.

6. Dispositif selon la revendication 5, **caractérisé en ce que** les distances du mouvement axial (19) de la saillie en forme de goupille (16) et du premier élément à douille (18) sont sensiblement identiques.

7. Dispositif selon la revendication 5 ou 6, **caractérisé en ce que** la saillie en forme de goupille (16) est entourée par un second élément à douille extérieur (21) qui n'est pas en rotation et avec lequel les pièces (11, 12) peuvent être pressées l'une contre l'autre pendant l'exécution de l'opération de liaison.

8. Dispositif selon la revendication 7, **caractérisé en ce que** le premier élément à douille (18) est guidé dans le second élément à douille extérieur (21).

9. Dispositif selon l'une des revendications 5 à 8, **caractérisé en ce que** la possibilité de mouvement axial (19) de la saillie en forme de goupille (16), et ainsi la possibilité de mouvement axial (20) y étant accouplée du premier élément à douille (18) dans la direction opposée, peut être commandée par des guidages à coulisse réalisés comme rainures hélicoïdales dans un élément à bague d'arrêt (23) par l'intermédiaire de boulons d'arrêt (24) s'engageant dedans.

10. Dispositif selon la revendication 9, **caractérisé en ce qu'**un carter (25) est prévu, dans lequel l'élément à bague d'arrêt (23) peut être réceptionné avec faculté de rotation au moyen d'un levier manuel (27) pouvant être actionné depuis l'extérieur (26) du carter.

11. Dispositif selon l'une des revendications 5 à 10, **caractérisé en ce qu'**un élément de maintien de goupille (28) est prévu, avec lequel la saillie en forme de goupille (16) peut être reliée de manière détachable et peut être entraînée en rotation.

12. Dispositif selon la revendication 11, **caractérisé en ce qu'**un élément ondulé (29), stationnaire dans la direction de rotation mais déplaçable axialement, s'engage dans l'élément de maintien de goupille (28).

13. Dispositif selon l'une ou plusieurs des revendications 5 à 12, **caractérisé en ce que** la saillie en forme de goupille (16) est réalisée avec une section transversale en forme de cercle.

14. Dispositif selon l'une ou plusieurs des revendications 5 à 12, **caractérisé en ce que** la saillie en forme de goupille (16) n'est pas réalisée avec une section transversale en forme de cercle.

15. Dispositif selon l'une ou plusieurs des revendications 5 à 13, **caractérisé en ce que** l'élément à douille (18) présente un trou de passage axial avec une section transversale en forme de cercle, dans lequel la saillie en forme de goupille (16) est réceptionnée et est guidée.

16. Dispositif selon l'une ou plusieurs des revendications 5 à 14, **caractérisé en ce que** l'élément à douille (18) présente un trou de passage axial dont la section transversale n'est pas en forme de cercle, dans lequel la saillie en forme de goupille (16) est réceptionnée et est guidée.
